# EUROPÄISCHE PATENTSCHRIFT

(11) **EP 1 634 911 B1**
(45) Veröffentlichungstag und Bekanntmachung des Hinweises auf die Patenterteilung: **18.02.2009**
(21) Anmeldenummer: 05016959.8
(22) Anmeldetag: 04.08.2005
(51) Int. Cl.: C08J 9/00, C04B 16/08, C04B 28/02

(54) **Wärme- und schalldämmende Bodenausgleichsschüttung**
Heat and sound insulating bulk material for filling uneven floors
Matériau isolant thermique et acoustique pour remplir un plancher inégal

(30) Priorität: 08.09.2004 DE 102004043837
(43) Veröffentlichungstag der Anmeldung: 15.03.2006
(73) Patentinhaber: BASF SE, 67056 Ludwigshafen (DE)
(72) Erfinder: von Auenmüller, Jürgen, 68794 Oberhausen-Rheinhausen (DE); Schmidt, Marco, 67346 Speyer (DE); Dietrich, Ulf, Dr., 67591 Wachenheim (DE)

(56) Entgegenhaltungen:
- WO-A-20/05021460
- AT-U1- 1 966
- DE-A1- 2 644 300
- DE-A1- 2 854 755
- DE-B- 1 275 786
- DE-C1- 10 227 629

## Beschreibung

Die Erfindung betrifft eine schüttfähige Mischung, enthaltend
a) 8 bis 30 kg/m³ Polymerschaumpartikel,
b) 4 bis 15 kg/m³ Zement, Kalkzement oder Gips,
c) 4 bis 30 kg/m³ redispergierbare Polymerpartikel auf Basis Styrol-Acrylat oder Styrol-Butadien
und deren Verwendung zur Herstellung von Bodenausgleichsschüttungen.

Dauerhafter Lärm, ob bewusst oder unbewusst wahrgenommen, schadet der Gesundheit. Dies ist seit langem bekannt und wissenschaftlich belegt. Aus diesem Grund gehört der sichere und wirksame Lärmschutz zu einem der wesentlichen Anforderungen an ein modernes Gebäude. Zu unterscheiden ist u.a. zwischen Außenlärm und der Übertragung von Trittschall. Zahlreiche Auseinandersetzungen zwischen Mietern und Vermietern belegen, das gerade Geh- und Laufgeräusche, Stühlerücken oder ähnliche Lärmquellen zu den häufigsten Lärmbelästigungen gehören.

Mit der DIN 4109, Schallschutz im Hochbau, wurden die Anforderungen an den Schallschutz festgelegt. Egal ob Wohnungen, Arbeitsräume, Krankenhäuser oder Schulen, überall gilt es, den geforderten Trittschallschutz zu erbringen. Diesen zu erfüllen, benötigt es einen bestimmten Aufbau der Bodenkonstruktion: so ist zwischen Rohdecke und Estrich eine Trittschalldammplatte einzubauen. Zur wirksamen Reduzierung der Trittschallübertragung müssen Decke, Trittschalldämmung, Randstreifen und schwimmender Estrich optimal aufeinander abgestimmt sein. Bisher hat sich hier die Kombination aus schwimmendem Estrich und Trittschalldämmplatten aus expandiertem Polystyrol (EPS) als gängige Bauweise etabliert.

Wesentlich ist hier das definierte Zusammenspiel zwischen Estrichmasse und Federungsvermögen der Dämmschicht. Somit können die Anforderungen an den Schallschutz im Hochbau mit ganz unterschiedlichen Aufbauten erfüllt werden und natürlich auch rechnerisch mittels der in der DIN 4109 festgelegten Formel berechnet werden.

Zur Fußbodendämmung werden üblicherweise Schaumstoffplatten verwendet, die direkt auf den Betonboden aufgelegt werden. Besonders wichtig wegen der Wärmedämmung nach unten ist dies bei Fußbodenheizungen. Hier werden in entsprechende Profilierungen der Schaumstoffplatten die Heißwasserrohre eingelegt. Über die Schaumstoffplatten wird ein Zementestrich aufgezogen, auf dem dann Holz- oder Teppichboden verlegt werden kann. Zusätzlich wirken die Schaumstoffplatten noch als Trittschalldämmung.

Ein geeignetes Material für die Schaumstoffplatten ist Polystyrol-Partikelschaum. Bei herkömmlichem Polystyrol-Partikelschaum nimmt die Isolierwirkung mit der Schaumstoffdichte stark ab, was entsprechend dickere Dämmplatten erforderlich macht. Aus Gründen des Schallschutzes möchte man jedoch Schaumstoffe mit möglichst niedriger Dichte einsetzen; andererseits sollen die Schaumstoffplatten nicht zu dick sein, damit möglichst wenig Raumhöhe verloren geht.

Das deutsche Gebrauchsmuster DE 296 16 362 U1 beschreibt eine Fußbodendämmung in Form von Schaumstoffplatten einer Dicke von 2 bis 8 cm, bestehend aus Polystyrol-Partikelschaum, welcher eine Dichte von 5 bis 20 g-l⁻¹ aufweist und 2 bis 10 Gew.-% Ruß oder Graphit enthält. Der Polystyrol-Partikelschaum ist vorzugsweise selbstverlöschend und besteht den Brandtest B 2.

Das Problem bei dieser Bauweise ist, dass die Schaumstoffplatten auf einer ebenen Fläche verlegt werden müssen. Bei unebenen Böden, vorwiegend bei der Renovierung von Altbauten, muss daher zunächst ein Estrich auf eine Ausgleichschüttung aus beispielsweise Sand oder Perlite verlegt werden. Hierzu müssen verschiedene Baustoffe in mehreren Arbeitsschritten aufwändig verarbeitet werden. Außerdem tragen diese Aufbauten erhebliches Gewicht ein, was im Bereich Altbauten ein nicht zu vernachlässigendes Problem darstellt.

Die DE-A 198 02 230 beschreibt einen wärmedämmenden Leichtputz auf Basis von hydraulischen Bindemitteln und Zuschlägen aus Schaumpolystyrol-Partikeln, die 0,1 bis 10 Gew.-% Ruß oder Graphit-Partikel enthalten, und auf eine Wand aufgetragen werden können.

Aufgabe der Erfindung war es, eine Ausgleichschüttung zu finden, die ohne aufwändige Arbeitschritte auch auf unebenen Böden aufgebracht werden kann. Die Ausgleichsschüttung sollte nach der Verfestigung insbesondere eine gute Wärmedämmung, eine ausreichende Elastizität für Trittschalldämmung aufweisen und so tragfähig sein, dass sie für den weiteren Aufbau kurzfristig begangen werden kann.

Demgemäss wurde eine schüttfähige Mischung, enthaltend
a) 8 bis 30 kg/m³ Polymerschaumpartikel,
b) 4 bis 15 kg/m³ Zement, Kalkzement oder Gips,
c) 4 bis 30 kg/m³ redispergierbare Polymerpartikel auf Basis Styrol-Acrylat oder Styrol-Butadien
gefunden, sowie deren Verwendung zur Herstellung von Bodenausgleichsschüttungen.

Bevorzugt werden als Polymerschaumpartikel vorgeschäumte, expandierbare Styrolpolymere (EPS) oder Polyolefinschaumpartikel, wie expandiertes Polypropylen (EPP) eingesetzt. Die Polymerschaumpartikel weisen in der Regel einen mittleren Partikeldurchmesser im Bereich von 2 bis 10 mm und eine Schüttdichte im Bereich von 5 bis 20 g/l, bevorzugt im Bereich von 8 bis 16 g/l auf.

Polymerschaumpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck- oder kontinuierlichen Vorschäumer können hierbei Endschüttdichten unter 10 g/l erhalten werden.

Legt man Wert auf eine besonders gute Trittschalldämmung, so verwendet man möglichst Polymerschaumpartikel mit großem mittleren Partikeldurchmesser und möglichst enger Partikelgrößenverteilung. Für eine besonders hohe Wärmedämmung verwendet man zweckmäßig Polymerschaumpartikel mit höhere Dichte, die sich zudem leichter in der Ausgleichsschüttung verarbeiten lassen.

Aufgrund ihrer hohen Wärmedämmfähigkeit verwendet man besonders bevorzugt vorgeschäumte, expandierbare Styrolpolymerisate, die athermane Festkörper, wie Ruß, Aluminium oder Graphit, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Die Polymerschaumpartikel sind insbesondere mit Flammschutzmitteln ausgerüstet. Sie können hierzu beispielsweise 1 bis 6 Gew.-% einer organischen Bromverbindung, wie Hexabromcylcodecan (HBCD) und gegebenenfalls zusätzlich 0,1 bis 0,5 Gew.-% Dicumyl oder eines Peroxides enthalten.

Zur Herstellung der Ausgleichschüttung wird die schüttfähige Mischung in eine Form, bzw. eine durch seitliche Wände begrenzten, unebenen Fußboden gebracht. Wässrige Polymerdispersionen können durch langsames Verdunsten von Wasser oder durch Zugabe von Zement, Kalkzement oder Gips verfestigen und die einzelnen Polymerschaumpartikel miteinander verkleben.

Um schüttfähige Ausgleichsschüttungen herzustellen, die an der Baustelle direkt durch Anrühren mit Wasser gebrauchsfertig sind, werden redispergierbare Polymerpartikel auf Basis von Styrol-Acrylat oder Styrol-Butadien verwendet. Geeignete redisperigerbare Polymerpartikel sind beispielsweise in EP-A 1 086 934 beschrieben.

Die schüttfähige Mischung enthält
a) 8 bis 30 kg/m³, insbesondere 10 bis 20 kg/m³ Polymerschaumpartikel,
b) 4 bis 15 kg/m³, insbesondere 6 bis 10 kg/m³ Zement, Kalkzement oder Gips,
c) 4 bis 30 kg/m³, insbesondere 8 bis 20 kg/m³ redispergierbare Polymerpartikel.

Die erfindungsgemäße Verwendung der schüttfähigen Mischung ermöglicht ein kostengünstiges Auftragen einer Ausgleichsschüttung mit Wärme- und Trittschalldämmung in nur einem Arbeitschritt.

### Beispiele:

### Polymerschaumpartikel:

Expandierbares Polystyrol (Neopor® 2200 der BASF Aktiengesellschaft, Perlgröße des Rohstoffes 1,4 - 2,3 mm) wurde auf einem kontinuierlichen Vorschäumer auf eine Dichte von ca. 18 g/l vorgeschäumt. Nach einer Zwischenlagerungszeit von ca. 4 Stunden wurde auf dem selben Vorschäumer auf die gewünschte Dichte von 13 g/l nachgeschäumt. Das vorgeschäumten Polystyrolschaumpartikel hatten eine Partikelgröße im Bereich von 6 bis 10 mm.

### Ausgleichsschüttung

80 g Portlandzement (CEM I 32,5 R) und 160 g Dispersionspulver Acronal S 430 P wurden trocken gemischt. Anschließend wurde diese Mischung mit 10 Liter (ca. 130 g) grobperligem, vorgeschäumten Neopor ® 2200 in einem Folienbeutel aus Lupolen® vermengt. Die entstandene Trockenmischung wurde in einem Creteangle-Mischer mit 0,2 l Wasser vorsichtig bis zur Homogenität gemischt und die schüttfähige, erdfeuchte Masse in die vorbereitete Form eingebracht.

Nach Verfestigung des Partikelschaumformkörpers wurden folgende Messungen durchgeführt:

Die Wärmeleitfähigkeit λ wurde bei 10°C gemäß DIN 52612 zu 34 mW/mK bestimmt. Die Trittschalleigenschaften wurden wie in der DIN 18164-2 beschrieben, ermittelt. Das Trittschallverbesserungsmaß s' wurde zu 12 MN/m³ bestimmt. Die Zusammendrückbarkeit (Dicke unter Belastung nach DIN EN 12431) lag unter den für Trittschallanwendungen tolerierbaren 3 mm (DIN 18164-2, Abschnitt 6.3.2.2 Tabelle 3).

## Patentansprüche

1. Schüttfähige Mischung, enthaltend
a) 8 bis 30 kg/m³ Polymerschaumpartikel,
b) 4 bis 15 kg/m³ Zement, Kalkzement oder Gips,
c) 4 bis 30 kg/m³ redispergierbare Polymerpartikel auf Basis Styrol-Acrylat oder Styrol-Butadien.

2. Schüttfähige Mischung nach Anspruch 1, enthaltend
a) 10 bis 20 kg/m³ Polymerschaumpartikel,
b) 6 bis 10 kg/m³ Zement, Kalkzement oder Gips,
c) 8 bis 20 kg/m³ redispergierbare Polymerpartikel auf Basis Styrol-Acrylat oder Styrol-Butadien.

3. Schüttfähige Mischung nach Anspruch 1 oder 2, **dadurch gekennzeichnet, dass** die Polymerschaumpartikel einen mittleren Partikeldurchmesser im Bereich von 2 bis 10 mm aufweisen.

4. Schüttfähige Mischung nach einem der Ansprüche 1 bis 3, **dadurch gekennzeichnet, dass** sie als Polymerschaumpartikel vorgeschäumtes, expandierbares Polystyrol (EPS) enthält.

5. Schüttfähige Mischung nach Anspruch 4, **dadurch gekennzeichnet, dass** das vorgeschäumte, expandierbare Polystyrol (EPS) 0,1 bis 10 Gew.-% athermane Partikel enthält.

6. Schüttfähige Mischung nach einem der Ansprüche 1 bis 5, **dadurch gekennzeichnet, dass** die Polymerschaumpartikel 1 bis 6 Gew.-% einer organischen Bromverbindung und 0,1 bis 0,5 Gew.-% Dicumyl oder eines Peroxides enthalten.

7. Formkörper, erhältlich aus einer schüttfähigen Mischung nach einem der Ansprüche 1 bis 6 durch Anrühren mit Wasser und Härtung in einer Form.

8. Verwendung der schüttfähigen Mischung nach einem der Ansprüche 1 bis 5 zur Herstellung von Bodenausgleichsschüttungen.

## Claims

1. A flowable mixture, comprising
a) from 8 to 30 kg/m³ of polymer foam beads,
b) from 4 to 15 kg/m³ of cement, lime clement, or gypsum plaster,] ]
c) from 4 to 30 kg/m³ of redispersible polymer particles based on styrene-acrylate or styrenebutadiene.

2. The flowable mixture according to claim 1, comprising
a) from 10 to 20 kg/m³ of polymer foam beads,
b) from 6 to 10 kg/m³ of clement, lime cement, or gypsum plaster,
c) from 8 to 20 kg/m³ of redispersible polymer particles based on styrene-acrylate or styrenebutadiene.

3. The flowable mixture according to claim 1 or 2, wherein the polymer foam beads have an average bead diameter in the range from 2 to 10 mm.

4. The flowable mixture according to any of claims 1 to 3, in which the polymer foam beads present comprise prefoamed, expendable polystyrene (EPS).

5. The flowable mixture according to claim 4, wherein the prefoamed, expandable polystyrene (EPS) comprises from 0.1 to 10% by weight of athermanous beads.

6. The flowable mixture according to any of claims 1 to 5, wherein the polymer foam beads comprise from 1 to 6% by weight of an organic bromine compound and from 0.1 to 0.5% by weight of dicumyl or of a peroxide.

7. A moulding, obtainable from a flowable mixture according to any of claims 1 to 6 via mixing with water and hardening in a mold.

8. The use of the flowable mixture according to any of claims 1 to 5 for production of floor-leveling beds.

## Revendications

1. Mélange en vrac, contenant
a) 8 à 30 kg/m³ de particules de mousse de polymère,
b) 4 à 15 kg/m³ de ciment, de ciment calcaire ou de plâtre,
c) 4 à 30 kg/m³ de particules polymères redispersibles à base de styrène-acrylate ou de styrène-butadiène.

2. Mélange en vrac selon la revendication 1, contenant
a) 10 à 20 kg/m³ de particules de mousse de polymère,
b) 6 à 10 kg/m³ de ciment, de ciment calcaire ou de plâtre,
c) 8 à 20 kg/m³ de particules polymères redispersibles à base de styrène-acrylate ou de styrène-butadiène.

3. Mélange en vrac selon la revendication 1 ou 2, **caractérisé en ce que** les particules de mousse de polymère présentent un diamètre moyen de particule dans la plage de 2 à 10 mm.

4. Mélange en vrac selon l'une quelconque des revendications 1 à 3, **caractérisé en ce qu'**il contient comme particules de mousse de polymère du polystyrène prémoussé, expansible (EPS).

5. Mélange en vrac selon la revendication 4, **caractérisé en ce que** le polystyrène prémoussé, expansible (EPS) contient 0,1 à 10% en poids de particules athermanes.

6. Mélange en vrac selon l'une quelconque des revendications 1 à 5, **caractérisé en ce que** les particules de mousse de polymère contiennent 1 à 6% en poids d'un composé organique du brome et 0,1 à 0,5% en poids de dicumyle ou d'un peroxyde.

7. Corps façonnés, pouvant être obtenus à partir d'un mélange en vrac selon l'une quelconque des revendications 1 à 6 par délayage avec de l'eau et durcissement dans un moule.

8. Utilisation du mélange en vrac selon l'une quelconque des revendications 1 à 5 pour la production de matériaux en vrac d'égalisation de sols.
